# FASCICULE DE BREVET EUROPEEN

(11) **EP 2 629 960 B1**
(45) Date de publication et mention de la délivrance du brevet: **01.10.2014**
(21) Numéro de dépôt: 11779828.0
(22) Date de dépôt: 10.10.2011
(51) Int. Cl.: B29C 55/16, B29C 55/08

(54) **DISPOSITIF POUR ÉTIRER UN FILM EN MATIÈRE SYNTHÉTIQUE DANS LE SENS TRANSVERSAL ET EN RÉALISER UNE RELAXATION CONTRÔLÉE DANS LE SENS LONGITUDINAL**
VORRICHTUNG ZUM DEHNEN EINER FOLIE AUS SYNTHETISCHEM MATERIAL IN QUERRICHTUNG UND ZUR GESTEUERTEN RELAXATION IN LÄNGSRICHTUNG
DEVICE FOR STRETCHING A FILM CONSISTING OF A SYNTHETIC MATERIAL IN THE TRANSVERSE DIRECTION AND ENABLING A CONTROLLED RELAXATION THEREOF IN THE LONGITUDINAL DIRECTION

(30) Priorité: 21.10.2010 FR 1058592
(43) Date de publication de la demande: 28.08.2013
(73) Titulaire: Marchante Moreno, Innocente, 73370 Le Bourget du Lac (FR)
(72) Inventeur: Marchante Moreno, Innocente, 73370 Le Bourget du Lac (FR)
(74) Mandataire: Verriest, Philippe
(86) Numéro de dépôt international: PCT/FR2011/052358
(87) Numéro de publication internationale: WO 2012/052656

(56) Documents cités:
- EP-A2- 0 291 775
- DE-A1- 4 241 213
- GB-A- 1 495 961

## Description

L'invention concerne un dispositif pour étirer un film en matière synthétique dans le sens transversal et permettre sa relaxation contrôlée dans le sens longitudinal.

Lors de la fabrication d'un film en matière synthétique, tel qu'un film en polypropylène, en polyester ou composé de toute autre matière thermoplastique, le film, après sa formation, passe successivement par une étape d'étirage longitudinal et une étape d'étirage transversal.

Un dispositif d'étirage transversal comprend généralement une première zone où s'effectue l'étirage du film dans le sens transversal et peut comporter une deuxième zone où s'effectue une relaxation du film dans le sens transversal. Cette deuxième zone permet une relaxation contrôlée du film dans le but de stabiliser le film pour limiter le phénomène de relaxation du film lors de son stockage ou de son utilisation.

Un tel dispositif comprend généralement un four, une première et une seconde séries de pinces, les pinces étant agencées pour saisir le film au niveau de ses bords longitudinaux, deux rails pour guider chacun une des séries de pinces dans le four, les rails s'étendant selon une orientation générale longitudinale et présentant une première zone dans laquelle ils divergent par rapport à la direction transversale du film et une seconde zone dans laquelle ils convergent selon la direction transversale du film. La première et la seconde séries de pinces sont entraînées le long du premier et du second rails au moyen de chaînes d'entrainement sans fin.

En fonctionnement, le film est entrainé longitudinalement par les pinces dans la première zone. Dans cette zone, la divergence des rails permet d'étirer le film selon la direction transversale par une augmentation continue de l'espacement entre les pinces de la première série et les pinces de la seconde série. Le film est ensuite entrainé dans la deuxième zone dans laquelle la convergence des rails permet une réduction de l'espacement entre les pinces de la première série et les pinces de la seconde série. Une telle réduction de l'espacement entre les pinces de la première et de la seconde séries permet de relâcher les contraintes transversales exercées par les pinces sur le film, ce relâchement permettant, en combinaison avec la température du film, une relaxation du film dans le sens transversal.

Néanmoins si ce type de dispositif permet à la fois un étirage et une relaxation contrôlée du film dans le sens transversal, il ne permet pas de réaliser une relaxation du film dans le sens longitudinal. Il en résulte qu'un film passé par une étape d'étirage et une étape de relaxation contrôlée avec un tel dispositif sera susceptible de présenter un phénomène de relaxation longitudinale du film lors de son stockage ou de son utilisation.

Pour remédier à cet inconvénient, il est connu d'utiliser un dispositif pour étirer simultanément un film en matière synthétique dans le sens longitudinal et dans le sens transversal, tel que celui décrit dans le document FR 2 849 801. Un tel dispositif comporte un four, une première et une seconde séries de pinces disposées de part et d'autre du film et agencées pour saisir le film sur ses bords longitudinaux, un premier rail de guidage pour guider les pinces de la première série et un second rail de guidage pour guider les pinces de la seconde série. Les pinces de la première série sont montées sur des articulations d'une première chaîne sans fin agencée pour entrainer les pinces le long du premier rail de guidage, et les pinces de la seconde série sont montées sur des articulations d'une seconde chaîne sans fin agencée pour entrainer les pinces le long du second rail de guidage.

La première chaîne est pourvue, sur des articulations intermédiaires à celles pourvues de pinces, d'éléments de retenue montés sur un premier rail de retenue sensiblement parallèle au premier rail de guidage. La seconde chaîne est également pourvue, selon une disposition identique, d'éléments de retenue montés sur un second rail de retenue sensiblement parallèle au second rail de guidage. Ces éléments de retenue en coopération avec le rail de retenue correspondant permettent de faire varier le pas de chaîne et donc l'espacement entre pinces.

En effet, la première chaîne est maintenue au niveau de ces articulations par les pinces de la première série sur le premier rail de guidage et par les éléments de retenue sur le premier rail de retenue. L'écartement ou le rapprochement entre le premier rail de guidage et le premier rail de retenue permet, en faisant varier la distance entre les articulations pourvues de pinces et les articulations pourvues d'éléments de retenue, de modifier la pliure de la première chaîne et donc de modifier le pas de chaîne et l'espacement entre pinces. Ce principe de fonctionnement est identique pour la seconde chaîne.

Ainsi, un tel dispositif, après étirage du film, peut comporter une zone de relaxation simultanée dans le sens transversal et le sens longitudinal. Le film est entraîné dans cette zone par les pinces de la première et seconde séries. La réduction des contraintes dans le sens transversal est obtenue par une convergence du premier et du second rails de guidage dans le sens transversal, tandis que la réduction des contraintes dans le sens longitudinal est obtenue par une augmentation simultanée de l'écartement entre le premier rail de guidage et le premier rail de retenu et entre le second rail de guidage et le second rail de retenue.

Néanmoins, si un tel dispositif permet une relaxation longitudinale du film, il présente un surcoût significatif vis-à-vis d'un dispositif d'étirage dans le seul sens transversal, et ce notamment du fait de la présence, pour chaque chaîne, de deux rails différents nécessitant un nombre important de galets de roulement pour assurer le guidage des éléments de retenue et des pinces sur les rails respectifs.

Le document EP 0 291 775 divulgue un dispositif pour étirer un film dans le sens transversal et permettre sa relaxation dans le sens longitudinal, le dispositif comprenant :
- une première et une seconde séries de pinces disposées de part et d'autre du film et agencées pour saisir le film au niveau de ses deux bords longitudinaux,
- deux rails de guidage agencés pour guider les pinces des deux séries,
- deux chaînes sans fin agencées pour entraîner les pinces de la première série le long du rail de guidage correspondant et deux chaînes sans fin agencées pour entraîner les pinces de la seconde série le long du rail de guidage correspondant,
- deux rails de contrôle supérieurs et deux rails de contrôle inférieurs présentant chacun une première portion et une deuxième portion décalées horizontalement l'une par rapport à l'autre, chaque rail de contrôle étant disposé à proximité de l'une des chaînes sans fin, la deuxième portion de chaque rail de contrôle étant décalée, par rapport à la première portion, en direction de la chaîne correspondante.

Chaque chaîne comporte successivement un premier type de maillon, un deuxième type de maillon et un troisième type de maillon, chaque maillon du premier type présentant un organe d'appui agencé pour prendre appui sur le rail de contrôle correspondant. Lorsque l'organe d'appui d'un maillon du premier type prend appui contre la deuxième portion du rail de contrôle correspondant, il s'en suit une déformation de la chaîne correspondante de manière à réduire le pas de chaîne.

Si un tel dispositif permet une relaxation longitudinale du film, il présente cependant des coûts de fabrication significatifs, du fait notamment de la présence d'un nombre important de rails de contrôle et de chaînes sans fin.

De plus, un tel dispositif présente un encombrement important du fait de la disposition des rails de contrôle verticalement de part et d'autre du rail de guidage correspondant.

La présente invention vise à remédier à ces inconvénients.

Un but de l'invention est donc de fournir un dispositif pour étirer un film en matière synthétique dans le sens transversal, de conception simple, économique et peu encombrante, et qui permette de réaliser après l'étirage transversal du film une relaxation du film dans le sens longitudinal.

A cet effet, l'invention concerne un dispositif pour étirer un film en matière synthétique dans le sens transversal et permettre sa relaxation dans le sens longitudinal, le dispositif comprenant :
- un four,
- une première et une seconde séries de pinces disposées de part et d'autre du film et agencées pour saisir le film au niveau de ces deux bords longitudinaux,
- deux rails agencés pour guider les pinces des deux séries dans le four, le premier et le second rails s'étendant selon une orientation générale parallèle à la direction longitudinale du film, le premier et le second rails divergeant dans une première zone du dispositif,
- deux chaîne sans fin agencées pour entraîner les pinces des deux séries le long des deux rails, chaque chaîne étant constituée de maillons articulés les uns sur les autres au moyen d'articulations, une articulation sur deux servant au montage d'une pince,
chaque rail présentant, sur une partie de sa longueur, une came faisant saillie du rail en direction de la chaîne correspondante, chaque chaîne comportant alternativement des maillons d'un premier type et des maillons d'un deuxième type, chaque maillon du premier type présentant un organe d'appui faisant saillie en direction du rail correspondant pour prendre appui sur la came afin de déformer la chaîne de manière à réduire le pas de chaîne.

La présence de maillons d'un premier type présentant chacun un organe d'appui agencé pour prendre appui sur la came du rail correspondant permet une déformation contrôlée de la chaîne correspondante, cette déformation permettant une réduction du pas de chaîne et donc de l'espacement entre les pinces montées sur la chaîne. Il est donc possible, par la réduction de l'espacement entre pinces, de réduire les contraintes longitudinales appliquées sur le film et donc de permettre sa relaxation contrôlée dans le sens longitudinal.

Le dispositif d'étirage selon l'invention permet ainsi de réaliser une relaxation du film dans le sens longitudinal, et ce tout en limitant notamment le nombre de chaînes sans fin et de galets de roulement. Il en résulte un dispositif d'étirage plus simple et moins couteux que ceux décrits dans les documents FR 2 849 801 et EP 0 291 775.

En outre, la disposition de chaque came au niveau du rail correspondant permet de réduire l'encombrement du dispositif et de simplifier encore ce dernier. Une telle disposition de chaque came permet également de mieux répartir les forces appliquées sur la chaîne correspondante.

Avantageusement, chaque maillon du premier type présente une forme générale en L, les articulations du maillon du premier type étant situées au niveau d'une première partie formant la première branche du L et l'organe d'appui étant disposé au niveau de l'extrémité libre d'une deuxième partie formant la deuxième branche du L.

Une telle forme en L de chaque maillon du premier type permet une optimisation des forces transmises par l'organe d'appui sur le maillon du premier type pour déformer la chaîne.

De manière avantageuse, l'articulation, pourvue d'une pince, de chaque maillon du premier type est disposée au niveau de l'extrémité de la première partie opposée à la deuxième partie, l'articulation dépourvue de pince étant disposée au niveau de l'intersection entre la première et la deuxième parties.

Une telle disposition des articulations sur les maillons du premier type permet une transmission des forces, liées à l'appui de l'organe d'appui sur la came, sur le maillon au niveau de l'articulation dépourvue de pince.

Selon une possibilité de l'invention, chaque organe d'appui est un galet agencé pour rouler sur la came correspondante. Un tel galet permet de limiter les frottements sur la came, limitant ainsi l'usure que pourrait créer de tels frottements.

Selon une autre possibilité de l'invention, chaque organe d'appui est un patin agencé pour glisser le long de la came correspondante. Un tel patin permet de limiter les frottements sur la came, limitant ainsi l'usure que pourrait créer de tels frottements.

De manière avantageuse, la hauteur de saillie de chaque came par rapport au rail correspondant est réglable.

Un tel réglage de la hauteur de saillie de chaque came permet de modifier l'amplitude de variation de l'écartement entre les pinces et donc de l'amplitude de la relaxation longitudinale du film pour adapter cette amplitude au type de film et aux caractéristiques recherchées.

De préférence, chaque rail comporte des moyens de déplacement de la came correspondante. Les moyens de déplacement comportent par exemple au moins un vérin agencé pour déplacer la came de manière à régler la hauteur de saillie de cette dernière.

Préférentiellement, chaque came s'étend jusqu'à l'extrémité aval du rail correspondant. Une telle continuité de la came jusqu'à l'extrémité aval du rail correspondant permet une relaxation contrôlée du film de qualité, sans application ultérieure de contraintes d'étirage longitudinal qui seraient liées à une discontinuité de la came.

Avantageusement, les cames sont disposées au niveau d'une seconde zone du dispositif, le four étant configuré pour appliquer au film une température différente dans la seconde zone que celle qu'il applique au film dans la première zone.

Une température adéquate du film, durant l'étape de relaxation, différente de la température durant son étirage permet une cristallisation du film, cette cristallisation permettant de garantir une bonne stabilisation du film en limitant les risques de déformation liée à une relaxation du film lors de son stockage ou lors de son utilisation.

De manière avantageuse, les rails comportent des portions convergentes situées en aval de la première zone du dispositif de manière à réaliser une relaxation transversale du film préférentiellement simultanément à la relaxation longitudinale du film.

De cette manière, un film ayant été étiré par un tel dispositif et étant passé par une relaxation simultanée dans le sens longitudinal et le sens transversal présente une bonne stabilité, limitant ainsi les risques de déformation liés à la relaxation du film que ce soit dans le sens longitudinal ou transversal.

De préférence, les portions convergentes des rails sont situées dans la seconde zone du dispositif.

Avantageusement, chaque pince comporte plusieurs galets pour permettre un guidage en translation de ladite pince sur le rail correspondant.

De tels galets permettent un guidage de la pince en limitant les frottements sur le rail correspondant tout en assurant un bon maintien de la pince sur ce même rail.

De façon avantageuse, chaque pince comporte au moins une première série de galets de roulement comprenant une pluralité de galets de roulement s'étendant sensiblement dans un même plan et disposés en quinconce de part et d'autre du rail correspondant. La première série comporte par exemple au moins un galet de roulement destiné à coopérer avec une première face du rail correspondant tournée vers le film, et au moins deux galets de roulement destinés à coopérer avec une deuxième face du rail correspondant, opposée à la première face.

De toute façon, l'invention sera bien comprise à l'aide de la description qui suit en référence au dessin schématique annexé représentant, à titre d'exemples non limitatifs, trois formes d'exécution de ce dispositif pour étirer un film en matière synthétique dans le sens transversal et pour permettre sa relaxation contrôlée dans le sens longitudinal.
La figure 1 est une vue d'ensemble d'une installation de production de film en matière synthétique ;
la figure 2 est une vue en coupe longitudinale, à échelle agrandie, d'une première forme d'exécution d'une partie de l'un des deux ensembles d'entrainement du film composé de pinces, d'un rail et d'une chaîne ;
la figure 3 est une vue en coupe transversale de l'un des deux ensembles d'entrainement ;
la figure 4 est une vue en coupe longitudinale illustrant l'interaction entre une chaîne et le rail correspondant ;
la figure 5 est une vue en coupe transversale, à échelle agrandie, d'une seconde forme d'exécution d'un des deux ensembles d'entrainement du film ;
la figure 6 est une vue en coupe longitudinale illustrant l'interaction entre une chaîne et le rail correspondant de l'ensemble d'entrainement de la figure 5 ;
la figure 7 est une vue en coupe longitudinale, à échelle agrandie, d'une troisième forme d'exécution d'une partie de l'un des deux ensembles d'entrainement du film composé de pinces, d'un rail et d'une chaîne ;
la figure 8 est une vue en coupe transversale, à échelle agrandie, de l'ensemble d'entrainement de la figure 7 ;
la figure 9 est une vue en perspective d'une partie de l'ensemble d'entrainement de la figure 7.

Pour les différentes formes de réalisation, les mêmes références seront utilisées pour des éléments identiques, ou assurant la même fonction, ceci par soucis de simplification de la description

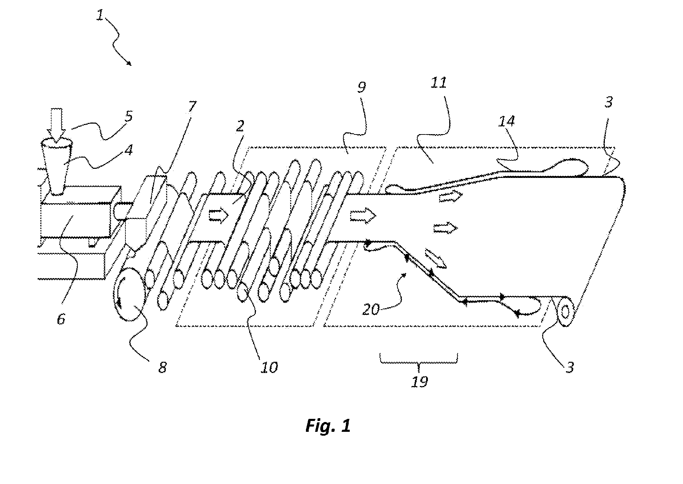

La figure 1 illustre une installation 1 de production d'un film 2 en matière synthétique. Le film 2 se présente sous une forme générale de ruban avec deux bords longitudinaux 3 sensiblement parallèles.

Une telle installation 1 comporte successivement les éléments de production suivants:
- un système d'alimentation 4 en matière synthétique 5,
- une extrudeuse 6 permettant une alimentation contrôlée en matière synthétique 5,
- un système de fusion 7 de la matière synthétique 5,
- un tambour de coulée 8 sur lequel est formé le film 2 par écoulement de la matière synthétique 5 fondue,
- un système 9 pour étirer le film 2 dans le sens longitudinal comportant des rouleaux 10 à différentiel de vitesse pour emporter et étirer le film 2,
- un dispositif 11 pour étirer le film 2 dans le sens transversal et permettre sa relaxation contrôlée dans le sens longitudinal.

Lors de la production d'un film 2 avec une telle installation, le film 2 est déplacé longitudinalement dans l'installation 1 en passant successivement dans les différents éléments de production de l'installation.

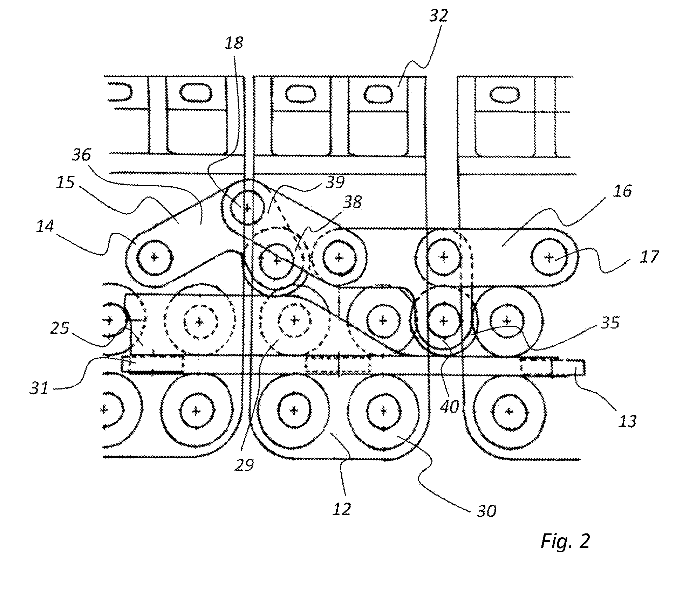

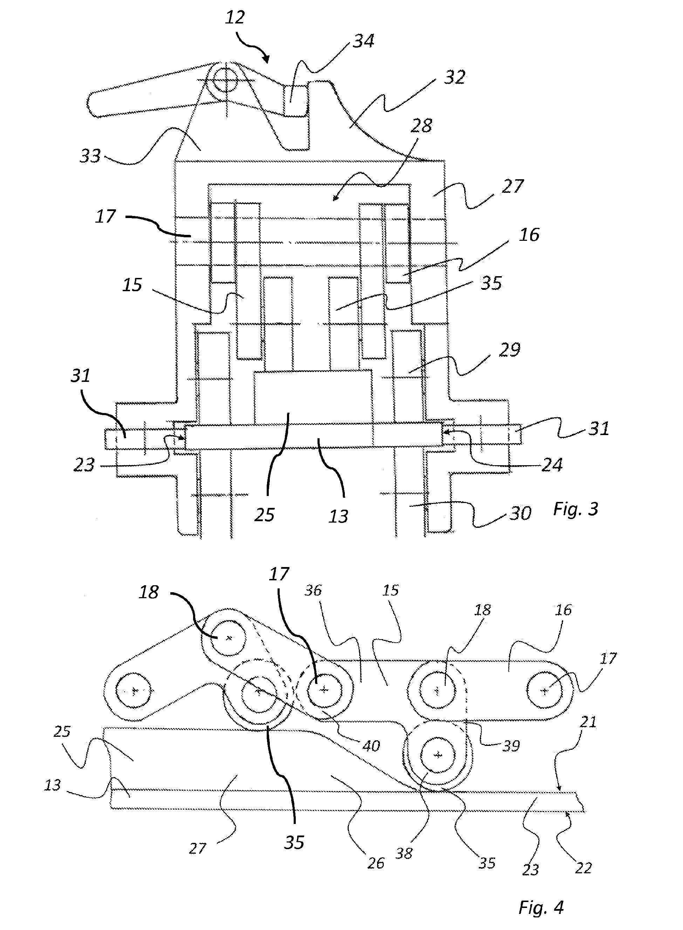

Le dispositif 11 comporte :
- un four (non représenté) permettant de réguler la température du film 2 pendant son étirage dans le sens transversal et sa relaxation contrôlée dans le sens longitudinal,
- une première et une seconde séries de pinces 12 (illustrées sur les figures 2 et 3), les pinces de la première série étant agencées pour saisir le film 2 sur le premier bord longitudinal 3, et les pinces 12 de la seconde série étant agencées pour saisir le film 2 sur le second bord longitudinal,
- un premier rail agencé 13 pour guider en translation la première série de pinces 12 dans le four,
- un second rail 13 agencé pour guider en translation la seconde série de pinces 12 dans le four,
- une première chaîne 14 sans fin agencée pour entraîner les pinces 12 de la première série
- une seconde chaîne 14 sans fin agencée pour entraîner les pinces 12 de la seconde série,

Chaque chaîne 14 comporte, comme illustré sur la figure 2, des maillons 15, 16 articulés les uns sur les autres au moyens d'articulations 17, 18.

Les rails 13 sont disposés dans le four selon une orientation générale longitudinale de part et d'autre du film 2. Les rails 13 présentent, comme illustré sur la figure 1, dans une première zone 19 du dispositif 11 une divergence 20 pour permettre l'étirage transversal du film 2.

Chaque rail 13 est, comme illustré sur la figure 3, de section sensiblement rectangulaire, les longueurs du rectangle formant les faces 21, 22 du rail et les largeurs du rectangle formant les cotés 23, 24 du rail 13. Comme montré sur la figure 4, la première face 21 du rail 13 est en regard d'un bord longitudinal 3 du film 2, la seconde face 22 étant opposée à la première face.

Comme illustré sur la figure 2, chaque rail 13 présente, sur une partie de sa longueur, une came 25 faisant saillie du rail en direction du film. Cette came 25 est disposée dans une seconde zone du dispositif 11, en aval de la première zone 19 et qui s'étend jusqu'à l'extrémité aval du rail 13. La came 25 présente une section sensiblement rectangulaire.

Chaque came 25 présente successivement dans la direction de déplacement du film 2, une première portion inclinée 26, la hauteur de saillie par rapport au rail 13 correspondant augmentant sensiblement régulièrement et une deuxième portion 27 présentant une hauteur de saillie par rapport au rail 13 sensiblement constante.

Chaque pince 12 présente, comme illustré sur la figure 3, un corps 27 de pince creux, de forme sensiblement parallélépipédique, avec une cavité 28 en direction du rail 13 correspondant. La cavité 28 loge des galets 29, 30, 31 montés en rotation sur le corps 27 de pince. Les galets 29, 30, 31 sont agencés sur chaque pince 12 de manière à permettre un maintien de la pince 12 sur le rail 13 correspondant.

Une première série de quatre galets 29 sont positionnés en appui sur la première face 21 du rail 13. Une seconde série de quatre galets 30 sont positionnés en appui sur la seconde face 22 du rail 13. Cet agencement de la première et de la seconde séries de galets 29, 30 est réalisé de manière à enserrer le rail 13. Deux galets 31 supérieur et inférieur permettent de compléter le maintien de la pince sur le rail, ceci en venant en appui sur le rail au niveau des cotés 23, 24 du rail 13.

Chaque pince 12 présente également, en direction du film 2, deux ensembles de préhension 32 du film comportant chacun une embase 33 et un doigt d'appui 34 sur le film 2, ces ensembles de préhension 32 permettent de maintenir le film 2 pendant son entrainement dans le dispositif 11.

Chaque pince 12 est montée sur la chaîne 14 correspondante au niveau d'une articulation 17 de la chaîne 14. Les pinces 12 sont montées sur une articulation sur deux de la chaîne 14 correspondante, le montage étant articulé autour de cette même articulation.

Chaque chaîne comporte alternativement des maillons 15 d'un premier type et des maillons 16 d'un deuxième type. Chaque maillon 15, 16 présente une articulation 17 servant au montage d'une pince et une articulation 18 dépourvue de pince.

Chaque maillon 15 du premier type présente une forme générale en L, avec les articulations 17, 18 disposées au niveau d'une première partie 36 formant la première branche du L et un galet 35 d'appui sur la came 25 disposé au niveau de l'extrémité libre 38 de la deuxième partie 39 formant la deuxième branche du L. L'articulation 17, pourvue d'une pince, est disposée au niveau de l'extrémité 40 de la première partie 36 opposée à la deuxième partie 39, l'articulation 18 dépourvue de pince étant disposée au niveau de l'intersection entre la première et la deuxième parties 36, 39.

La première partie 36 est, lorsque le maillon 15 du premier type est dans la première zone 19 du dispositif 11, sensiblement parallèle au rail 13, la deuxième partie 39 s'étendant perpendiculairement au rail 13.

Ainsi, lors de l'entrée du film dans le dispositif 11, le film 2 est saisi par les pinces 12 au niveau de ses bords longitudinaux 3. Les pinces 12, entrainées par les chaînes 14, transportent le film 2 le long des rails 13. Dans la première zone 19 du dispositif, le film 2 ayant atteint la température adéquate d'étirage, la divergence des rails 13 permet d'étirer transversalement le film 2 par une augmentation continue de l'espacement entre les pinces 12 de la première série et les pinces 12 de la seconde série.

Après le passage du film 2 dans la première zone 19 du dispositif, lorsque les pinces 12 arrivent au niveau de la came 25, le galet 35 de chacun des maillons 15 du premier type vient en appui sur la came 25. Cet appui pousse le maillon 15 correspondant au niveau de l'articulation 18 dépourvue de pince en créant au niveau de cette même articulation, une pliure de chaîne 14, les articulations 17 servant au montage de pinces 12 étant maintenues par les pinces 12. Cette pliure de chaîne 14 a pour effet, comme le montre les figures 2 et 4, de diminuer le pas de chaîne 14 et permettre un rapprochement des pinces 12 en relâchant ainsi la contrainte longitudinale sur le film 2. Ce relâchement à une température adéquate de relaxation du film permet une relaxation longitudinale du film 2.

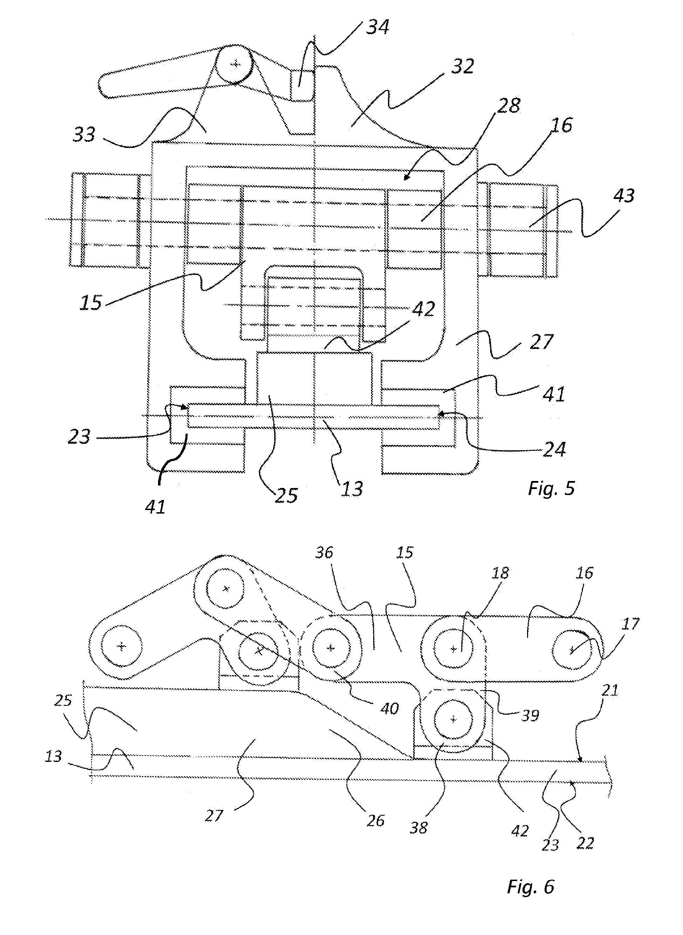

Les figures 5 et 6 illustrent une seconde forme d'exécution du dispositif 11. Un dispositif 11 selon cette forme d'exécution se différencie d'un dispositif 11 selon la précédente forme de réalisation en ce que les pinces 12 sont montées en coulissement sur les rails 13 par l'utilisation de deux coulisseaux 41 enserrant chacun un bord du rail 13, en ce que l'organe d'appui est un patin 42 et en ce que l'articulation 17 servant au montage de chaque pince 12 porte un organe de guidage 43 permettant un guidage des pinces 12 lorsque les pinces 12 ne sont pas guidées par le rail 13 correspondant.

Le principe de fonctionnement d'un dispositif 11 selon cette forme d'exécution est identique au principe de fonctionnement d'un dispositif 11 selon la forme de réalisation précédemment décrite, le patin 42 venant en appui sur la came 25 pour permettre la réduction du pas de chaîne 14.

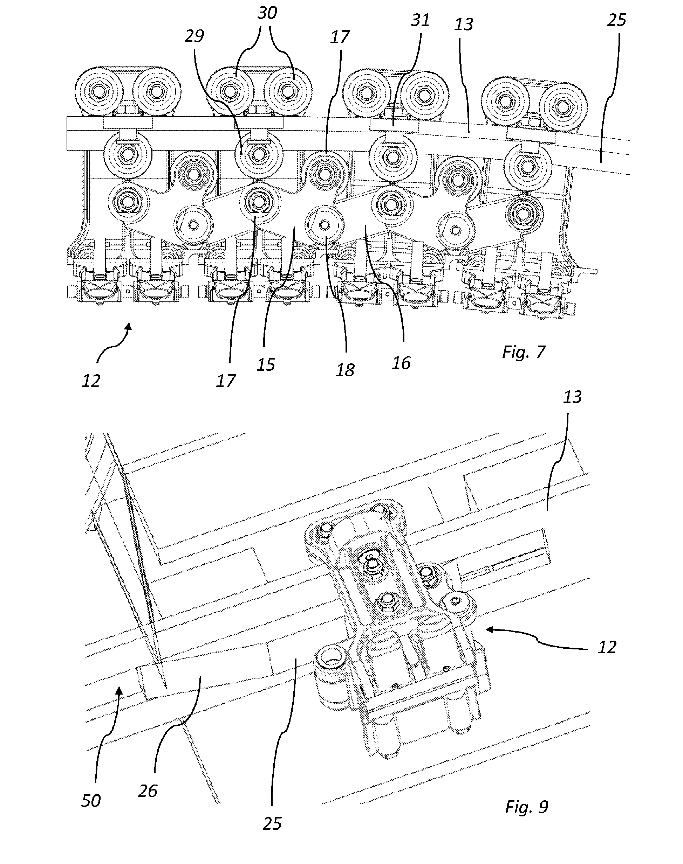

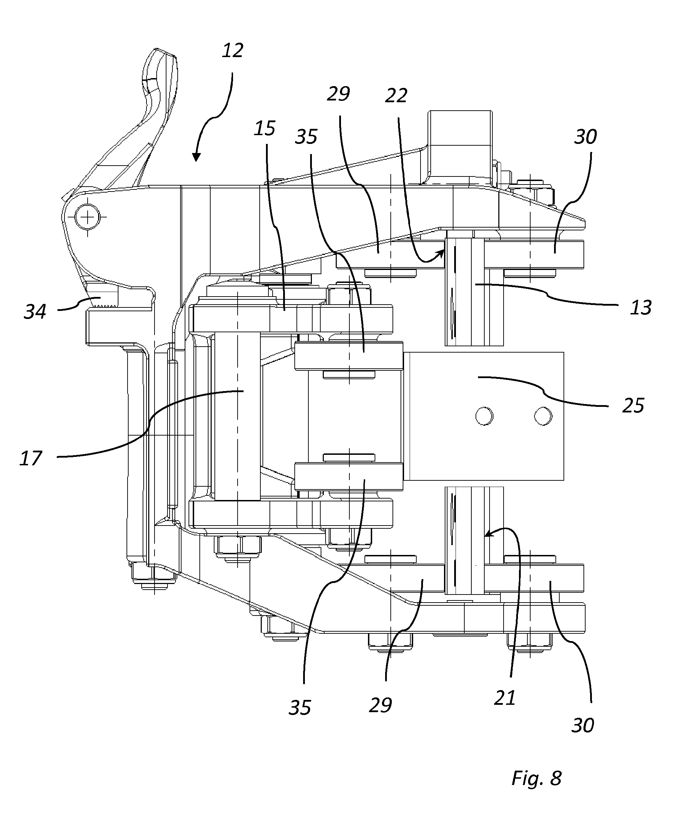

Les figures 7 et 8 illustrent une troisième forme d'exécution du dispositif 11 qui diffère de celle illustrée sur les figures 2 à 4 essentiellement en ce que chaque pince 12 comprend une première série de galets de roulement comportant un galet 29 positionné en appui sur la première face 21 du rail 13 correspondant et deux galets 30 positionnés en appui sur la seconde face 22 du rail 13, les galets de la première série prenant appui sur la portion supérieure du rail, et une deuxième série de galets de roulement comportant un galet 29 positionné en appui sur la première face 21 du rail 13 correspondant et deux galets 30 positionnés en appui sur la seconde face 22 du rail 13, les galets de la deuxième série prenant appui sur la portion inférieure du rail. Avantageusement, les galets 29, 30 de chacune des première et deuxième séries sont disposés en quinconce.

Une telle disposition des galets 29 et 30 permet d'assurer un guidage de chaque pince 12 le long du rail correspondant, y compris dans les portions courbées de ce dernier, sans nécessiter la présence d'un jeu fonctionnel entre les galets et le rail correspondant (jeu qui est obligatoire lorsque la pince 12 comporte deux paires de galets de roulement 29 et deux paires de galets de roulement 30 disposés de part et d'autre du rail comme cela est montré sur la figure 2). La suppression de ce jeu fonctionnel limite considérablement les vibrations de la chaîne. De plus, une telle disposition des galets assure un contact constant de chaque galet sur le rail correspondant, ce qui limite l'usure de chaque galet. En effet, il est préférable pour un galet de roulement d'être constamment en mouvement, plutôt que d'alterner périodes de mouvement et périodes d'arrêt.

Selon cette troisième forme d'exécution de l'invention, la came 25 est une came réglable. A cet effet, le rail 13 présente un passage longitudinal 50 pour la came 25, la came 25 étant montée déplaçable en translation perpendiculairement au rail 13. Il est ainsi possible de régler la valeur du pas de chaîne, en fonction de la relaxation souhaitée pour le film. De préférence, chaque rail 13 comporte des moyens de déplacement (non représentés sur les figures) de la came 25 correspondante. Les moyens de déplacement comportent par exemple au moins un vérin agencé pour déplacer la came de manière à régler la hauteur de saillie de cette dernière.

Selon une possibilité préférée et non illustrée de l'invention, les rails 13 présentent, dans la deuxième zone du dispositif 11, une portion sur laquelle les rails 13 convergent de manière à permettre une relaxation dans le sens transversal simultanée à la relaxation dans le sens longitudinal.

Comme il va de soi, l'invention ne se limite pas aux seules formes d'exécution de ce dispositif pour étirer un film en matière synthétique dans le sens transversal et permettre sa relaxation contrôlée dans le sens longitudinal, décrites ci-dessus à titre d'exemples, elle en embrasse au contraire toutes les variantes de réalisation, dans le cadre des revendications jointes.

## Revendications

1. Dispositif (11) pour étirer un film (2) en matière synthétique dans le sens transversal et permettre sa relaxation dans le sens longitudinal, le dispositif comprenant :
- un four,
- une première et une seconde séries de pinces (12) disposées de part et d'autre du film et agencées pour saisir le film (2) au niveau de ses deux bords longitudinaux (3),
- deux rails (13) agencés pour guider les pinces (12) des deux séries dans le four, le premier et le second rails (13) s'étendant selon une orientation générale parallèle à la direction longitudinale du film (2), le premier et le second rails (13) divergeant dans une première zone (19) du dispositif,
- deux chaînes sans fin (14) agencées pour entraîner les pinces des deux séries le long des deux rails (13), chaque chaîne (14) étant constituée de maillons (15, 16) articulés les uns sur les autres au moyen d'articulations (17, 18), une articulation sur deux servant au montage d'une pince (12),
chaque rail (13) présentant, sur une partie de sa longueur, une came (25) faisant saillie du rail (13) en direction de la chaîne (14) correspondante, chaque chaîne (14) comportant alternativement des maillons (15) d'un premier type et des maillons (16) d'un deuxième type, chaque maillon (15) du premier type présentant un organe d'appui (35, 42) faisant saillie en direction du rail (13) correspondant pour prendre appui sur la came (25) afin de déformer la chaîne (14) de manière à réduire le pas de chaîne.

2. Dispositif (11) selon la revendication 1, **caractérisé en ce que** chaque maillon (15) du premier type présente une forme générale en L, les articulations (17, 18) du maillon du premier type (15) étant situées au niveau d'une première partie (36) formant la première branche du L et l'organe d'appui (35, 42) étant disposé au niveau de l'extrémité libre (38) d'une deuxième partie (39) formant la deuxième branche du L.

3. Dispositif selon la revendication 2, **caractérisé en ce que** l'articulation (17), pourvue d'une pince, de chaque maillon (15) du premier type est disposée au niveau de l'extrémité (40) de la première partie (36) opposée à la deuxième partie (39), l'articulation (18) dépourvue de pince étant disposée au niveau de l'intersection entre la première et la deuxième parties (36, 39).

4. Dispositif (11) selon l'une des revendications 1 à 3, **caractérisé en ce que** chaque organe d'appui est un galet (35) agencé pour rouler sur la came (25) correspondante.

5. Dispositif (11) selon l'une des revendications 1 à 3, **caractérisé en ce que** chaque organe d'appui est un patin (42) agencé pour glisser le long de la came (25) correspondante.

6. Dispositif (11) selon l'une des revendications 1 à 5, **caractérisé en ce que** la hauteur de saillie de chaque came (25) par rapport au rail (13) correspondant est réglable.

7. Dispositif (11) selon l'une des revendications 1 à 6, **caractérisé en ce que** chaque came (25) s'étend jusqu'à l'extrémité aval du rail (13) correspondant.

8. Dispositif (11) selon l'une des revendications 1 à 7, **caractérisé en ce que** les cames (25) sont disposées au niveau d'une seconde zone du dispositif, le four étant configuré pour appliquer au film (2) une température différente dans la seconde zone que celle qu'il applique au film (2) dans la première zone.

9. Dispositif (11) selon l'une des revendications 1 à 8, **caractérisé en ce que** les rails (13) comportent des portions convergentes situées en aval de la première zone (19) du dispositif de manière à réaliser une relaxation transversale du film (2) préférentiellement simultanément à la relaxation longitudinale du film (2).

10. Dispositif (11) selon l'une des revendications 1 à 9, **caractérisé en ce que** chaque pince (12) comporte plusieurs galets (29, 30, 31) agencés pour permettre un guidage en translation de ladite pince (12) sur le rail (13) correspondant.

## Patentansprüche

1. Vorrichtung (11) zum Ziehen einer Folie (2) aus synthetischem Material in Querrichtung und zu ihrer möglichen Entspannung in Längsrichtung, wobei die Vorrichtung folgendes umfasst:
- einen Ofen,
- eine erste und eine zweite Reihe an Greifern (12), die beiderseits der Folie angebracht und angeordnet sind, um die Folie (2) im Bereich ihrer beiden Längsränder (3) zu erfassen,
- zwei Schienen (13), die angeordnet sind, um die Greifer (12) der beiden Reihen in den Ofen zu führen, wobei sich die erste und die zweite Schiene (13) in eine allgemeine Richtung erstrecken, die parallel zur Längsrichtung der Folie (2) verläuft, wobei die erste und die zweite Schiene (13) in einer ersten Zone (19) der Vorrichtung auseinanderlaufen,
- zwei Endlosketten (14), die angeordnet sind, um die Greifer der beiden Reihen entlang der beiden Schienen (13) anzutreiben, wobei sich jede Kette (14) aus Kettengliedern (15, 16) zusammensetzt, die über Artikulationen (17, 18) ineinander gefügt sind, wobei jede zweite Artikulation zur Montage eines Greifers (12) dient,
wobei jede Schiene (13) auf einem Teil ihrer Länge einen Nocken (25) aufweist, der über die Schiene (13) hinaus in Richtung der entsprechenden Kette (14) übersteht, und wobei jede Kette (14) abwechselnd Kettenglieder (15) eines ersten Typs und Kettenglieder (16) eines zweiten Typs umfasst, wobei jedes Kettenglied (15) des ersten Typs eine Auflagevorrichtung (35, 42) aufweist, die in Richtung der entsprechenden Schiene (13) übersteht, um auf dem Nocken (25) aufzuliegen, um die Kette (14) zu verformen, um die Kettenteilung zu verringern.

2. Vorrichtung (11) nach Anspruch 1, **dadurch gekennzeichnet, dass** jedes Kettenglied (15) des ersten Typs eine allgemeine L-Form aufweist, wobei sich die Artikulationen (17, 18) des Kettenglieds des ersten Typs (15) im Bereich eines ersten Abschnitts (36) befinden, der den ersten Schenkel des L bildet, und die Auflagevorrichtung (35, 42) im Bereich des freien Endes (38) eines zweiten Abschnitts (39) angeordnet ist, der den zweiten Schenkel des L bildet.

3. Vorrichtung nach Anspruch 2, **dadurch gekennzeichnet, dass** die Artikulation (17) jedes Kettenglieds (15) des ersten Typs, die mit einem Greifer versehen ist, im Bereich des Endes (40) des ersten Abschnitts (36) angeordnet ist, der gegenüber dem zweiten Abschnitt (39) liegt, und die Artikulation (18) ohne Greifer im Bereich der Überschneidung zwischen dem ersten und dem zweiten Abschnitt (36, 39) angeordnet ist.

4. Vorrichtung (11) nach einem der Ansprüche 1 bis 3, **dadurch gekennzeichnet, dass** jede Auflagevorrichtung eine Rolle (35) ist, die angeordnet ist, um auf dem entsprechenden Nocken (25) zu rollen.

5. Vorrichtung (11) nach einem der Ansprüche 1 bis 3, **dadurch gekennzeichnet, dass** jede Auflagevorrichtung ein Schlitten (42) ist, der angeordnet ist, um entlang des entsprechenden Nockens (25) zu gleiten.

6. Vorrichtung (11) nach einem der Ansprüche 1 bis 5, **dadurch gekennzeichnet, dass** die Überstandshöhe eines jeden Nockens (25) im Verhältnis zur entsprechenden Schiene (13) einstellbar ist.

7. Vorrichtung (11) nach einem der Ansprüche 1 bis 6, **dadurch gekennzeichnet, dass** sich jeder Nocken (25) bis zum hinteren Ende der entsprechenden Schiene (13) erstreckt.

8. Vorrichtung (11) nach einem der Ansprüche 1 bis 7, **dadurch gekennzeichnet, dass** die Nocken (25) im Bereich einer zweiten Zone der Vorrichtung angeordnet sind, wobei der Ofen konfiguriert ist, um eine Temperatur auf die Folie (2) anzuwenden, die sich in der zweiten Zone von jener unterscheidet, die er in der ersten Zone auf die Folie (2) anwendet.

9. Vorrichtung (11) nach einem der Ansprüche 1 bis 8, **dadurch gekennzeichnet, dass** die Schienen (13) konvergierende Abschnitte enthalten, die nach der ersten Zone (19) der Vorrichtung angeordnet sind, um für eine Entspannung der Folie (2) in Querrichtung zu sorgen, die vorzugsweise gleichzeitig mit der Entspannung der Folie (2) in Längsrichtung erfolgt.

10. Vorrichtung (11) nach einem der Ansprüche 1 bis 9, **dadurch gekennzeichnet, dass** jeder Greifer (12) mehrere Rollen (29, 30, 31) enthält, die angeordnet sind, um eine Führung des besagten Greifers (12) in Vorschubrichtung auf der entsprechenden Schiene (13) zu ermöglichen.

## Claims

1. A device (11) for stretching a film (2) made of synthetic material in the transverse direction and allowing its relaxation in the longitudinal direction, the device comprising:
- a furnace,
- a first and a second series of clamps (12) disposed on either side of the film and arranged to grip the film (2) at its two longitudinal edges (3),
- two rails (13) arranged to guide the clamps (12) of the two series in the furnace, the first and the second rails (13) extending in a general orientation parallel to the longitudinal direction of the film (2), the first and the second rails (13) diverging in a first area (19) of the device,
- two endless chains (14) arranged to drive the clamps of the two series along the two rails (13), each chain (14) being constituted of links (15, 16) articulated on each other by means of hinges (17, 18), a hinge out of two serving for the mounting of a clamp (12),
each rail (13) having, over a part of its length, a cam (25) protruding from the rail (13) in the direction of the corresponding chain (14), each chain (14) including, alternatively, links (15) of a first type and links (16) of a second type, each link (15) of the first type having a bearing member (35, 42) protruding in the direction of the corresponding rail (13) to bear on the cam (25) in order to deform the chain (14) so as to reduce the chain pitch.

2. The device (11) according to claim 1, **characterized in that** each link (15) of the first type has a general L-shaped form, the hinges (17, 18) of the link of the first type (15) being located at a first part (36) forming the first branch of the L and the support member (35, 42) being disposed at the free end (38) of a second part (39) forming the second branch of the L.

3. The device according to claim 2, **characterized in that** the hinge (17), provided with a clamp, of each link (15) of the first type is disposed at the end (40) of the first part (36) opposed to the second part (39), the hinge (18) devoid of a clamp being disposed at the intersection between the first and the second parts (36, 39).

4. The device (11) according to any of claims 1 to 3, **characterized in that** each support member is a roller (35) arranged to roll on the corresponding cam (25).

5. The device (11) according to any of claims 1 to 3, **characterized in that** each support member is a shoe (42) arranged to slide along the corresponding cam (25).

6. The device (11) according to any of claims 1 to 5, **characterized in that** the protrusion height of each cam (25) relative to the corresponding rail (13) is adjustable.

7. The device (11) according to any of claims 1 to 6, **characterized in that** each cam (25) extends to the downstream end of the corresponding rail (13).

8. The device (11) according to any of claims 1 to 7, **characterized in that** the cams (25) are disposed at a second area of the device, the furnace being configured to apply to the film (2) a temperature in the second area different from the one it applies to the film (2) in the first area.

9. The device (11) according to any of claims 1 to 8, **characterized in that** the rails (13) include converging portions located downstream of the first area (19) of the device so as to carry out a transverse relaxation of the film (2) preferably simultaneously to the longitudinal relaxation of the film (2).

10. The device (11) according to any of claims 1 to 9, **characterized in that** each clamp (12) includes a plurality of rollers (29, 30, 31) arranged to allow a transitional guidance of said clamp (12) on the corresponding rail (13).
